# EUROPEAN PATENT APPLICATION

(11) **EP 2 963 592 A1**
(43) Date of publication of application: **06.01.2016**
(21) Application number: 14306074.7
(22) Date of filing: 02.07.2014
(51) Int. Cl.: G06K 19/10, G06K 19/02

(54) **Data carrier**

(71) Applicant: Gemalto SA, 92190 Meudon (FR)
(72) Inventor: Syrjänen, Taru, 92190 Meudon (FR)
(74) Representative: Cour, Pierre

(57) **Abstract**

The present invention relates to a data carrier (1'), especially a security document, such as an identification card, comprising authentication data comprising personalized data, the data carrier comprising a first side (8') and a second side (9') opposite to the first side and at least one recording layer (5') provided with at least a first piece of authentication data (10') of said authentication data, an array of lenticular elements (13') being arranged at the first side (8') of the data carrier (1') to provide from a first predetermined angle of view (α) an image of said at least first piece of authentication data (10'). In order that the data carrier according to the invention shall not suffer from greyness and in order to make the data carrier esthetically appealing and manufacture it at low costs, the recording layer (5') is a non-doped transparent PVC layer comprising said at least first piece of authentication data (10').

## Description

### Field of the invention

The present invention relates to security features found in data carriers, such as security documents. More specifically the present invention relates to a data carrier comprising authentication data comprising personalized data, the data carrier comprising a first side and a second side opposite to the first side and at least one recording layer provided with at least a first piece of authentication data of said authentication data, an array of lenticular elements being arranged at the first side of the data carrier to provide from a first predetermined angle of view an image of said at least first piece of authentication data. The authentication data in the recording layer has been made by laser beam. The authentication data is typically a text and/or numbers, or a photograph, visible by a naked eye. The lenticular elements can also be called lenticular lenses. Especially, the data carrier is a security document, such as an identification card, e.g. a passport or a driving license, a credit card and or bank card.

### Background for the invention

Data carriers, such as identification cards and credit cards are commonly and increasingly used for various purposes. An identification card should offer great security against counterfeiting because it is used to verify aspects of a person's personal identity. Also other types of data carriers should, naturally, offer great security against counterfeiting. Despite the requirement that the data carriers should be impossible or at least very difficult to forge, they should be easy to check visually in different lighting conditions, they should be esthetically appealing and attractive and should also be easy and cheap to mass produce. Because all these characteristics are difficult to meet at the same time, one has, in practice, to make compromises. In prior art data carriers authentication data is typically disposed in a carbon-doped polycarbonate (PC) recording layer or some other doped plastic recording layer. The idea to use a doped plastic layer as recording layer is that the carbon darkens or blackens in those areas which are hit by a laser beam. Said darkening or blackening is a safety mark providing authentication data in the recording layer. Although one can produce within a doped PC layer black markings having good contrast, a doped PC layer, however, makes the data card relatively expensive and also greyish. Generally, a grayish appearance is not considered aesthetically appealing. Consequently, there is a need to improve the visual properties and appearance of prior art data carriers without, however, to suffer in security aspects. This invention concerns especially the problem how to economically manufacture esthetically appealing and attractive data carriers, especially data cards which meet stringent requirements on security and are hence difficult to forge.

### Brief disclosure of the invention

One essential aim of the present invention is to provide a data carrier, especially a data card, which can be manufactured esthetically appealing and attractive and which meets stringent requirements on security and, hence, is difficult to forge. The data carrier of the present invention is characterized in that the recording layer is a non-doped transparent PVC layer comprising said at least first piece of authentication data.

In order to achieve in the recording layer a proper marking which possesses a good contrast when viewed, the recording layer should have sufficient thickness. Preferably the thickness of the recording layer is 150 to 840 µm.

Preferably at least one transparent plastic layer is arranged between the recording layer and the array of lenticular elements, the thickness of the transparent plastic layer preferably being smaller than the thickness of the recording layer. Preferably an opaque layer is arranged between the recording layer and the transparent plastic layer, the opaque layer comprising a window between the recording layer and the array of lenticular elements. The opaque layer can consist of printing ink but can alternatively be made up of e.g. a white (or colored) plastic. The window is either a transparent plastic window or merely an opening. The opaque layer may in principle contain any type of printing and can typically contain the name and logo of e.g. a bank. Such a printing can alternatively be on the lower surface of the transparent layer. The opaque layer can be used to give the data carrier a desired layout identifying e.g. a bank or a company.

Preferably the transparent plastic layer is a doped PVC layer comprising a further piece of authentication data made by laser techniques. This obviously improves the security of the data carrier.

Preferably there is a transparent PET layer between the recording layer and the transparent plastic layer. A bi-axially oriented PET layer is advantageous because it is very strong, it is more durable in high temperatures than a PVC layer and has better bending properties thus improving the durability of the data card.

Preferably a second transparent plastic layer is arranged between the recording layer and the second side of the data carrier, and a second opaque layer is positioned between the recording layer and the second plastic layer, the second opaque layer comprising a second window between the recording layer and the second side of the data carrier. The second window allows identifying from the second side (back side) of the data carrier authentication data within the recording layer. This is convenient because authentication data can be identified without a need to turn the data carrier (e.g. data card).

Preferred embodiments of the invention are presented in the attached dependent claims.

One major advantage of the data carrier according to the invention is that it does not suffer from greyness. Thanks to this, the data carrier can be made esthetically appealing. Another advantage is that the data carrier can typically be manufactured at low costs. PVC-based ID cards (e.g. 50-100% of the material is PVC) are cheap, when compared to PC-based ID cards, because the raw-material is cheap. Also the lamination is easy to carry out at low temperatures. Like in known data carriers, the recording layer can be provided with authentication data which can easily be identified and which is difficult to forge.

### Brief description of the drawings

The invention will be described with reference to the accompanying drawing in which
Figure 1 shows a data carrier in the form or an identification card according to the invention,
Figure 2 illustrates a magnified section of a first embodiment of the invention taken along line II - II of Figure 1, and
Figure 3 illustrates a magnified section of a second embodiment of the invention, said embodiment being a data carrier corresponding to the data carrier shown in Figure 1 and said section taken along a line from the data carrier corresponding to line II -II of Figure 1.

### Detailed description of the invention

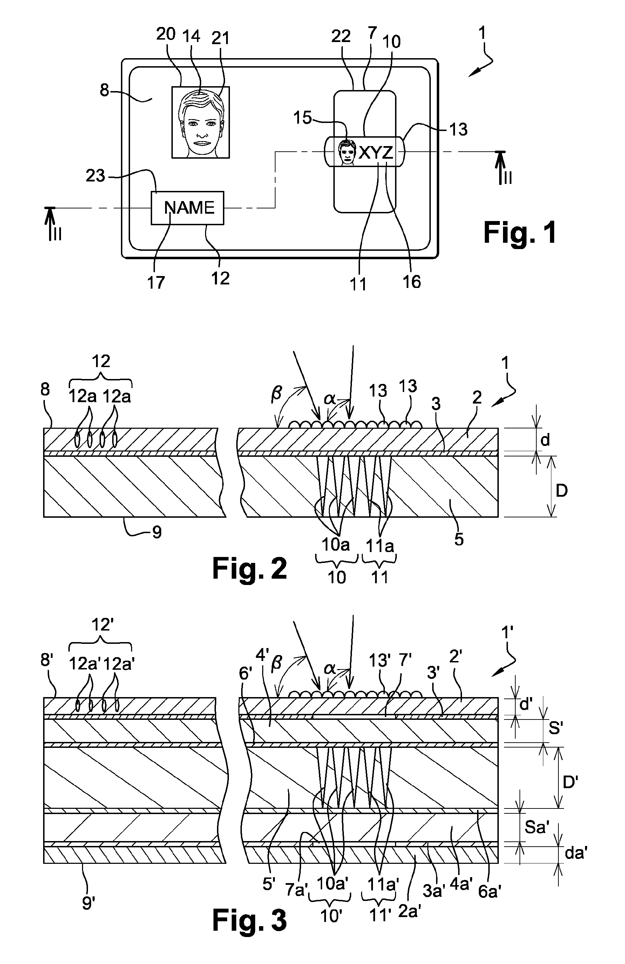

Figure 1 shows a data carrier 1 in the form of an identification card, e.g. a passport or a driving license. The identification card is a security document comprising a first side 8 and a second side (denoted with reference sign 9 in Figure 2) opposite to the fist side 8. The identification card comprises in a subarea 20 thereof a portrait 21, as a piece of authentication data 14 in the form of personalized data. Subarea 22 of the identification card comprises, as a first piece of authentication data 10 in the form of personalized data, a mini portrait 15 of the person shown in subarea 20. The mini portrait 15 is a small size portrait of the person shown in subarea 20. The mini portrait 15 can be seen with a naked eye. Subarea 22 comprises also a second piece of authentication data 11 comprising personalized data. The second piece of authentication data 11 is e.g. a text, e.g. the name of a company, or the date of birth 'XYZ' 16 of the person shown in the mini portrait 15. The identification card comprises in a further subarea 23 thereof, as a further piece of authentication data 12, further personalized data, typically at least the name 17 of the person shown in the portraits 21 and 15.

On top of the authentication data 10, 11 there is, at the site of subarea 22, an array of lenticular elements 13 (lenticular lenses) defining a planar plane which is in parallel with a plane defined by the identification card. The array of lenticular elements 13 is a changeable laser image array (CLI technology array) or a multiple laser image array (MLI technology array). Owing to the characteristics of the array of lenticular elements, said personalized data (or other pieces of authentication data) contained in subarea 22 (i.e. the mini portrait 15 and/or the date of birth 16) can clearly identified from predetermined angles to the plane of the array of lenticular elements 13 but cannot be identified at least properly from angles which deviate from said angles. Accordingly, the mini portrait 15 in subarea 22 can be clearly seen from a direction forming an angle α, or forming an angle close to angle α, to the plane of the identification card, c.f. angle α in Figure 2; and the date of birth 'XYZ' 16 text in subarea 22 can only be seen from a direction forming an angle ß, or an angle close to angle ß, to the plane of the identification card. Angle B differs from angle α, and hence one cannot see at the same time both the mini portrait 15 and the text "XYZ" 16 in sub area 22. Figure 1 is hence, in this respect, incorrect. However, both the mini portrait 15 and the date of birth 'XYZ' 16 have been shown in Figure 1 to illustrate that sub area 22 contains two pieces of authentication data 10, 11.

In the embodiments shown in the drawings the mini portrait 15 can be seen from an angle α which is close to perpendicular to the plane of the array of the lenticular elements 13. Owing to this, a Xerox-copy can reproduce the mini portrait 15 but cannot capture or reproduce the date of birth "XYZ" which requires an angle ß of view much smaller than 90 degrees to be seen. Consequently, the array of lenticular elements 13 provides, as such, a security feature to the identification card. Arrays of lenticular elements are commonly known from identification documents. The angles α and B vary depending on the direction of laser rays used in the engraving, as understood by persons skilled in the art.

Figure 2 illustrates in a sectional view a very simple construction and embodiment of the data carrier 1 according to the invention. The sectional view is taken along line II - II in Figure 1. Reference sign 2 denotes an upper transparent plastic layer. The layer 2 is preferably a doped PVC (polyvinyl chloride) layer (a layer doped with carbon). The layer 2 comprises a further subarea 23 containing a further piece of authentication data 12 in the form of the name 17 of the person shown in the portrait 21. The further piece of authentication data 12 is formed of dark spots forming markings 12a made with laser engraving technique. Alternatively, authentication data can be incorporated onto the surface of layer 2 by thermal transfer printing. Then layer 2 need not be a doped layer. As an alternative to PVC, layer 2 can e.g. be a transparent PET (polyethylene terephthalate) layer, e.g. a non-doped PET layer. Necessarily layer 2 does not comprise authentication data.

The array of lenticular elements 13 is made into the layer 2 as an integral part of the layer in a manner known to persons skilled in the art. The layer 2 can alternatively be a transparent non-doped layer.

Reference sign 3 denotes an opaque layer positioned under layer 2. The opaque layer 3 is preferably manufactured by screen printing technology. The opaque layer 3 is e.g. a white (or colored) plastic layer. There can be a printing on the upper surface of the opaque layer 3. Alternatively, there can be a printing on the lower surface of layer 2. Commonly such an opaque layer 3 is called a white screen layer. Layer 3 may in principle contain any kind of picture or information one wishes to have in the identification card. The picture or information of the opaque layer 3 can be seen from the first side 8 of the data carrier 1 through the transparent layer 2. The opaque layer 3 contains the portrait 21 shown in Figure 1. Alternatively, the portrait 21 could be in the upper layer 2 (like authentication data 12 in upper layer 2) or it can be on the surface of upper layer 2. The opaque layer 3 may also contain e.g. the name of the person shown in the portrait 21 in which case one does not have to have the name in layer 2. The opaque layer 3 enables also to give the card a desired layout. The opaque layer 3 can e.g. contain a company logo or bank logo if the card is a business card or a bank card, respectively.

Reference sign 7 denotes a window made into the opaque layer 3. The term "window" includes here generally an opening, transparent area or location. The window 7 is a see-through window positioned under the array of lenticular elements 13.

Reference sign 5 denotes a recording layer comprising pieces of authentication data 10, 11, i.e. the first piece of authentication data 10 which provides the mini portrait 15 and the second piece of authentication data 11 which provides the date of birth 'XYZ' 16, respectively, c.f. Figure 1. The recording layer 5 is a transparent non-doped PVC layer. Although the recording layer 5 is non-doped, it was surprisingly found in tests that one could by laser engraving techniques in combination with an array of lenticular elements modify the structure of the recording layer 5 so that weak laser engraved markings 10a, 11a along the thickness of the recording layer were created, and when viewing these weak markings 10a, 11 a at a distinct angle (or distinct angles) through the array of lenticular elements, they could be seen as black or very dark spots having a good contrast. This, however, required that the thickness of the recording layer 5 was large enough. The thickness D of the recording layer 5 should preferably be more than 100 µm, and more preferably more than 150 µm. The markings 10a form the mini portrait 15, and the markings 11 a form the date of birth 'XYZ' 16, c.f. Figure 1. Thanks to the recording layer 5 being non-doped, it does not have a grayish appearance in contrast to known doped layers of PC and PVC. The markings 10a, 11 a making up the mini portrait 15 and the date of birth 'XYZ', respectively, can be seen through the array of lenticular elements 13 and the window 7. The transparent plastic layer 2, the opaque layer 3 and the recording layer 5 are attached to each other in a manner known by persons skilled in the art. The thickness d of the transparent layer 2 is smaller than the thickness D of the recording layer 5. The thickness d of the transparent layer 2 is 0.1 to 0.6 times the thickness D of the recording layer 5. The thickness of layers 5 and 2 together (D + d) is not more than 840 µm. The thickness range for combined layers 5 and 2 (D + d) is 100 to 840 µm, preferably 150 to 840 µm. Preferably, the thickness D of the recording layer 5 is 100 to 700 µm, preferably 150 to 600 µm. A thick recording layer 5 improves safety of the data card, because one can make in a thick recording layer markings 10a, 11 a which go to great depth into the data card and which, hence, are difficult to forge. As the doped layer 2 is thin in relation to the focal length of the array of lenticular elements 13, greyness of the data carrier is negligible. The opaque layer 3 could alternatively be positioned e.g. under the recording layer 5. Necessarily the data card does not contain an opaque layer. Reference sign 6 designates an adhesive layer combining the recording layer 5 with the transparent layer 2. The thickness of the adhesive layer 6 is negligible.

Figure 3 shows a preferred embodiment of the invention. In the Figure reference signs which correspond to those in Figure 2 have been used for corresponding parts. The embodiment of Figure 3 differs from the embodiment shown in Figure 2 in that the data carrier 1' comprises a transparent PET (polyethylene terephthalate) layer 3' between the transparent plastic layer 2' and the non-doped transparent PVC layer 5'. Additionally, the data carrier 1' of Figure 3 comprises a transparent PET layer 4' between the transparent layer 2' and the recording layer 5'. Still further, the data carrier 1' comprises on the second side 9' a second transparent plastic layer 2a' as a bottom layer, and a second opaque layer 3a' and a second transparent PET layer 4a' between the second transparent plastic layer 2a' and the recording layer 5'. Like in Figure 2, the second plastic layer 2a' is preferably a doped PVC layer, but can be a non-doped layer. Between the second plastic layer 2a' and the second transparent PET layer 4a' there is a second opaque layer 3a'. The second opaque layer 3a' could alternatively be positioned e.g. between the recording layer 5' and the second PET layer 4a'. The plastic layer 2a' corresponds to the plastic layer 2' and the second opaque layer 3a' and the second transparent PET layer 4a' correspond to the opaque layer 3' and the transparent PET layer 4', respectively. In the opaque layer 3a' there is a second window 7a' corresponding to window 7' of opaque layer 3'. The transparent PET layers 4' and 4a' have been attached to the recording layer 5' with adhesive 6', 6a'. No array of lenticular elements is present on the second side 9' of the data carrier 1. The second window 7a' of the second opaque layer 3a' is aligned with the window 7' of the opaque layer 3' so that it is possible to look from the second side 9' of the data carrier 1' to the first side 8' of the data carrier 1' through the windows 7a' and 7'. Owing to the windows 7' and 7a' one can from the backside of the card notice the existence of identification data contained within subarea 22' without the need to turn the identification card.

In the embodiment of Figure 3 the layers 4' and/or 4a' could be made of PC, PVC, or synthetic paper (e.g. a polyolefin material having the trade mark TESLIN manufactured by PPG Industries).

The thickness of layers 2', 3', 4', 5', 4a', 3a', 2a' is together 250 to 840 µm. Preferably, the thickness of D' of the recording layer 5' is 150 to 600 µm, the thickness S', Sa' of each PET layer 4', 4a' is 0.25 to 0.8 times the thickness D' of the recording layer 5', and the thickness d' of each transparent plastic layer 2', 2a' is 0.2 to 0.6 times the thickness of a PET layer (PET layer 4' or PET layer 4a'). Preferably the thickness d' corresponds to thickness da', and the thickness S' corresponds to thickness Sa'.

The above combination of layers and materials provides a data carrier 1' and identification card which can be manufactured easily and economically. PET is easily bonded to PVC with adhesive. No expensive doped PC (polycarbonate) layer is used. The embodiment of Figure 3 is advantageous because of its symmetrical nature having similar layers on both sides of the recording layer. Owing to the symmetrical layers, the card can be manufactured easily and without risk of the card warping as a consequence of manufacturing. Additionally, a symmetric identification card is durable.

The manufacturing methods of the identification card and especially the detailed steps of the manufacturing methods of the identification card are not explained here, because they are well known to a person skilled in the art.

The basic manufacturing methods include a lamination process, or alternatively, hot stamping the lens profile with a die casting tool having the lens profile of the lenticular elements prepared to its surface. Several companies provide lamination plates with the CLI feature.

The invention has been disclosed above with reference to only two embodiments of the invention. It should be noted that the invention can be realized in many different manners within the scope of the claims. For example the number of layers and subareas in the data carrier and the number of authentication data contained therein may vary. It is conceivable that the data carrier contains only one layer (the layer being a non-doped PVC layer; other plastic layers and opaque layers not being present). The first piece of personalized data (10) in the subarea (20) can be some other data than a mini portrait (15). Thus, the contents of the personalized data in on or more of the subareas of the data carrier can vary. Further, when a plastic layer (2, 2') is present, it is conceivable that no piece of authentication data is contained therein. Although the data carrier (1, 1') has in the above example been described as an identification card, it could alternatively be e.g. a credit card or a bank card.

## Claims

1. A data carrier (1, 1') comprising authentication data comprising personalized data, the data carrier comprising, a first side (8, 8') and a second side (9, 9') opposite to the first side and at least one recording layer (5, 5') provided with at least a first piece of authentication data (10, 10') of said authentication data, an array of lenticular elements (13, 13') being arranged at the first side (8, 8') of the data carrier (1, 1') to provide from a first predetermined angle of view (α) an image of said at least first piece of authentication data (10, 10'), **characterized in that** the recording layer (5, 5') is a non-doped transparent PVC layer comprising said at least first piece of authentication data (10, 10').

2. A data carrier (1, 1') according to claim 1, **characterized in that** the thickness (D, D') of the recording layer (5, 5') is 150 to 840 µm.

3. A data carrier (1, 1') according to claim 1 or 2, **characterized in that** at least one transparent plastic layer (2, 2') is arranged between the recording layer (5, 5') and the array of lenticular elements (13, 13').

4. A data carrier (1, 1') according to claim 3, **characterized by** an opaque layer (3, 3') between the recording layer (5, 5') and the transparent plastic layer (2, 2'), the opaque layer comprising a window (7, 7') between the recording layer (5, 5') and the array of lenticular elements (13, 13').

5. A data carrier (1') according to claim 4, **characterized by** a transparent PET layer (4') between the recording layer (5') and the transparent plastic layer (2').

6. A data carrier (1') according to claim 5, **characterized in that** the thickness (D') of the recording layer (5') is 150 to 600 µm, the thickness (S') of the transparent PET layer (4') is 0.25 to 0.8 times the thickness (D') of the recording layer (5'), and the thickness (d') of the transparent plastic layer (2') is 0.2 to 0.6 times the thickness (S') of the transparent PET layer (4').

7. A data carrier (1') according to claim 5 or 6, **characterized in that** a second transparent plastic layer (2a') is arranged between the recording layer (5') and the second side (9') of the data carrier (1').

8. A data carrier (1') according to claim 7, **characterized by** a second opaque layer (3a') between the recording layer (5') and the second transparent plastic layer (2a').

9. A data carrier (1') according to claim 8, **characterized in that** the second opaque layer (2a') comprises a second window (7a') between the recording layer (5') and the second side (9') of the data carrier (1').

10. A data carrier (1') according to claim 9, **characterized in that** the second window (7a') of the second opaque layer (3a') is aligned with the window (7') of the opaque layer (3') enabling looking from the second side (9') to the first side (8') of the data carrier (1') through the second window (7a') of the second opaque layer (3a') and the window (7') of the opaque layer (3').

11. A data carrier (1') according to any preceding claim 8 to 10, **characterized by** a second transparent PET layer (4a') between the recording layer (5') and the second transparent plastic layer (2a').

12. A data carrier (1') according to claim 11, **characterized in that** the thickness (Sa') of the second transparent PET layer (4a') is 0.25 to 0.8 times the thickness (D') of the recording layer (5'), and the thickness (da') of the second transparent plastic layer (2a') is 0.2 to 0.6 times the thickness (Sa') of the second transparent PET layer (4a').

13. A data carrier (1, 1') in the form of a security document according to any preceding claim, **characterized in that** the security document is in the form of a card and **in that** the transparent plastic layer (2, 2') comprises said array of lenticular elements (13, 13') as an integral part of the transparent plastic layer (2, 2').

14. A data carrier (1, 1') according to any preceding claim, **characterized in that** the first piece of authentication data (10, 10') is visible by a naked eye and is formed of a plurality of markings (10a, 10a').

15. A data carrier (1, 1') according to any preceding claim, **characterized in that** the recording layer (5, 5') comprises a second piece of authentication data (11, 11') comprising personalized data, the array of lenticular elements (13, 13') being arranged to provide from a second predetermined angle of view (B) an image of said second piece of authentication data (11, 11'), said second angle of view (B) deviating from the first predetermined angle of view (α).
